# NEUE EUROPÄISCHE PATENTSCHRIFT

(11) **EP 1 750 020 B2**
(45) Veröffentlichungstag und Bekanntmachung des Hinweises auf die Entscheidung über den Einspruch: **03.04.2013**
(45) Hinweis auf die Patenterteilung: 03.12.2008
(21) Anmeldenummer: 06009901.7
(22) Anmeldetag: 13.05.2006
(51) Int. Cl.: F16B 35/00, E02D 5/80

(54) **Spinnanker**
Spider-shaped anchor
Dispositif d'ancrage en forme d'araignée

(30) Priorität: 03.08.2005 AT 5272005
(43) Veröffentlichungstag der Anmeldung: 07.02.2007
(73) Patentinhaber: Alpintechnik AG, 9050 Appenzell (CH)
(72) Erfinder: Oberhofer, Alexander, 5760 Saalfelden (AT)
(74) Vertreter: Riebling, Peter

(56) Entgegenhaltungen:
- EP-A- 1 122 372
- DE-B- 1 271 045
- FR-A- 867 153
- GB-A- 1 098 555
- US-A- 279 440
- US-B1- 6 871 455
- PROSPEKT "EURO GEOTECHNIK-DYWIDAG FELSBOLZEN"
- PROFESSIONEMONTAGNA Nr. 73, 2003, Seiten 130 - 131
- 'Brockhaus Enzyklopädie', Bd. 17, 1973, WIESBADEN Seite 737

## Beschreibung

Gegenstand der Erfindung ist ein Spinnanker zum Verankern im Erdbereich aus einem an der Oberfläche mit einem Gewinde ausgestatteten Rohr.

Ankern zum Verankern im Erdreich sind schon bekannt, siehe z.B. die Dokumente US 6,871,455 B1 und FR 867.153.

Der Vorteil des Einsatzes des Spinnankers der Erfindung liegt darin, dass dieser Spinnanker nahezu in jedem Gelände, außer felsigem Gelände bzw. reinen Fels, eingesetzt werden kann. Sowohl die Montage als auch die Demontage bereiten keine Probleme. Hohes Fachwissen ist weder für die Montage noch für die Demontage notwendig. Der Einsatz des Spinnankers geschieht umweltfreundlich bzw. umweltschonend.

Durch die spinnenartige Befestigung des Spinnankers wird den auftretenden Quer-, Zug- und Druckkräften entgegengewirkt. Der Vorteil der Gesamtkonstruktion liegt überdies darin, dass der gesamte Spinnanker einschließlich Gewinderohr mit Gewindestäben im Erdreich eingebaut wird, sodass dadurch Unfälle und Behinderungen vermieden werden. Erst die befestigten Gegenstände (z.B. Snowgripper oder Verkehrstafeln) befinden sich außerhalb des Erdreiches.

Eine wesentliche Zusatzfunktion des Spinnankers liegt darin, dass die Entfernung des Spinnankers einschließlich Gewindestangen jederzeit ohne jede Beschädigung möglich und ein neuer Einsatz an einem anderen Ort vorgenommen werden kann. Gerade daraus ergibt sich der umweltschonende Einsatz des Spinnankers, wobei es sich im Ergebnis um eine technische Befestigungseinrichtung im Gelände handelt.
Eine weitere Zusatzfunktion liegt in der Verwendung der Schraubmuffe. Erfolgt der Einsatz des Spinnankers im sumpfigen Gelände und reicht die Normallänge von ca. 1 m nicht aus, wird auf der oberen Seite des Ankers eine Schraubmuffe aufgesetzt. In diese Schraubmuffe wird ein weiteres Gewinderohr ohne Spitz eingesetzt bzw. aufgeschraubt und kann in weiterer Folge über ein technisches Hilfsmittel (z.B. eines Elektroschraubers, Luftschraubers oder eines Hydraulikschraubers) das Spiralrohr fortgesetzt in einer größeren Länge im Erdreich versenkt werden. Daraus ergibt sich ein Doppeleinsatz der Schraubmuffe.
Die Verlängerung kann beliebig fortgesetzt werden.

### Vorteile, die durch den Einsatz des Spinnankers erreichtwerden:

- geringe Montagezeit
- hohe Zug-, Druck- und Querkräfte
- vielseitiger Einsatz im Gelände
- keine oder nur sehr geringe Umweltbelastung
- zur Montage können entweder mechanische Werkzeuge oder ein Elektroschrauber, Luftschrauber oder ein Hydraulikschrauber verwendet werden.
- leichte bzw. nicht aufwendige Demontage aus dem Erdreich
- wiederholter Einsatz möglich
- kostengünstiges Preis- und Leistungsverhältnis des Verankerungssystems

Durch den Einsatz des Spinnankers wird das Montieren von verschiedenen Gegenständen im Gelände, nämlich Snowgrippern im Lawinenbereich, diverse sonstige Lawinenverbauungen, Schutzzäune, Schnee- und Windzäune, Verkehrstafeln im Straßenbereich, Carports im Baubereich usw. wesentlich erleichtert und kostengünstiger gestaltet.
Es ist jede Wiederverwendung der einzelnen Teile des Spinnankers möglich.
Die einfache und sichere Handhabung verhindert nicht nur Umwelteinflüsse, sondern auch Unfälle.

Diese Aufgabenstellung wird mit den kennzeichnenden Merkmalen des Anspruches 1 und der Unteransprüche gelöst.

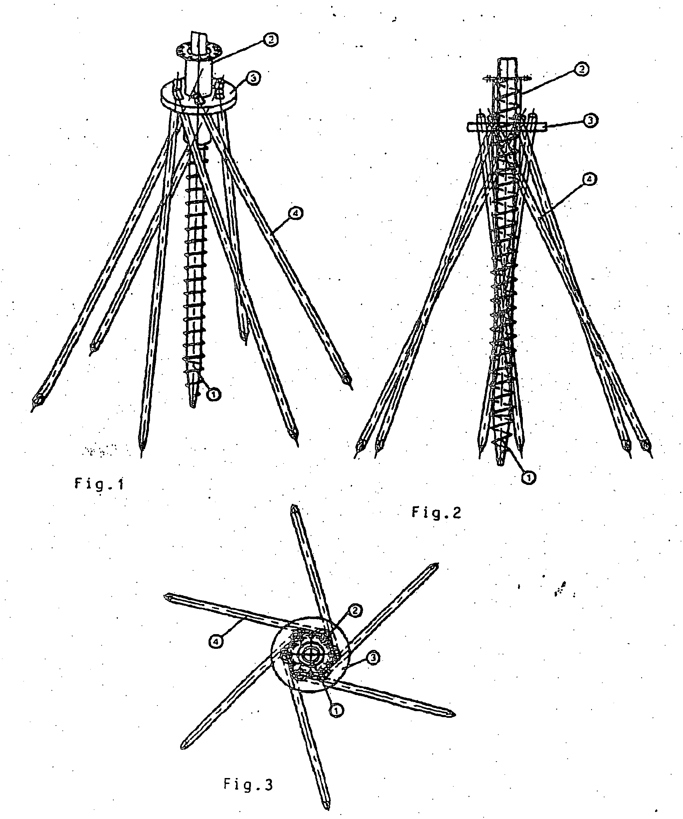

Fig. 1 zeigt eine isometrische Darstellung des erfindungsgemäßen Spinnankers
Fig. 2 zeigt die Vorderansicht des erfindungsgemäßen Spinnankers
Fig. 3 zeigt eine Draufsicht auf den erfindungsgemäßen Spinnanker

Der Spinnanker (das Wort setzt sich zusammen aus Spinne und Anker) besteht aus einem Spezialanker 1 welcher aus einem Rohr ausgebildet gefertigt ist und entweder händisch (mit einem Hebel) oder mit einem Elektroschrauber, einem Luftschrauber oder einem Hydraulikschrauber in das Gelände (Erdreich, Geröllhalde, Wüstensand, usw.) hineingedreht wird; einer Schraubmuffe 2, welche aus einem Stahlrohr oder einem Nirostarohr gepresst wird oder einer Gewindemuffe 2 für Vollstab oben auf das Rohr oder den Vollstab des genannten Spinnankers, aufgesetzt wird. An einer Gewindemuffenplatte 3, welche ebenfalls oben auf dem Spezialanker unterhalb der Gewindemuffe 2 aufgeschraubt ist, sind Gewindestäbe 4, in das Erdreich eingetrieben. Der Spinnanker wie beschrieben wird insgesamt, d.h. zuerst der Spezialanker 1 und in weiterer Folge die Gewindestäbe 4 in das Erdreich eingetrieben. Durch das zusätzliche Eintreiben der Gewindestäbe 4 in bestimmten Winkeln in gleicher Richtung unter Verwendung der Gewindemuffenplatte 3 wird technisch eine spinnenartige Befestigung des Spinnankers erreicht, sodass sich dadurch die Zugkraft, Druckkraft und Querkraft des Spezialankers nach oben um größer als 100 % erhöht. Die Handhabung (Benützung) des Spinnankers an Ort und Stelle im Gelände ist einfach und bedarf keiner besonderen Kenntnisse, um die Montage ausführen zu können. Der Einsatzbereich des Spinnankers ist das gesamte Erdreich mit allen Festigkeitsklassen sowie Geröllhalden und Wüstensand, ausgenommen jedoch der Fels.

### LEGENDE

- 1.: Gewinderohr
- 2.: Gewindemuffe
- 3.: Gewindemuffenplatte
- 4.: Gewindestäbe

## Patentansprüche

1. Spinnanker zum Verankern im Erdreich aus einem an seiner Oberfläche mit einem Gewinde ausgestatteten Gewinderohr (1), auf das eine Gewindemuffenplatte (3) des Spinnankers durch einfaches Aufschrauben befestigt ist, durch welche zur Erhöhung des Zug-, Druck- und Querkräftewiderstandes Stäbe (4) des Spinnankers in das Erdreich einbringbar sind, **dadurch gekennzeichnet, dass** die Stäbe (4) als Gewindestäbe ausgebildet sind und durch die Gewindemuffenplatte (3) in bestimmten Winkeln in gleicher Richtung und Gegenrichtung in das Erdreich einschraubbar sind, so dass eine spinnenartige Befestigung des Spinnankers erreicht wird.

2. Spinnanker nach Anspruch 1, **dadurch gekennzeichnet, dass** die über die Gewindemuffenplatte (3) in das Erdreich einschraubbaren Gewindestäbe (4) doppeltflache-pfeilspitzartige Spitzen aufweisen, womit im festen, steinigen und felsigen Gelände ein Festfressen des Gewindestabes (4) vermieden wird.

3. Spinnanker nach Anspruch 1 oder 2, **dadurch gekennzeichnet, dass** unter Einsatz einer am oberen Ende des Gewinderohrs (1) aufschraubbaren Gewindemuffe (2) eine Verlängerung des Ankers je nach Bedarf ermöglicht ist.

## Claims

1. Spider anchor (1) for anchoring in the ground, consisting of a threaded pipe (1) which is provided on its surface with a thread and onto which a threaded bushing plate (3) of the spider anchor is secured simply by screwing on, by which plate rods (4) of the spider anchor can be introduced into the ground to increase the tensile, compressive and shear force resistances, **characterised in that** the rods (4) are configured as threaded rods and can be screwed into the ground through the threaded bushing plate (3) at defined angles and in the same direction and the opposite direction, such that a spider-like anchorage of the spider anchor is achieved.

2. Spider anchor according to claim 1, **characterised in that** the threaded rods (4) which can be screwed into the ground via the threaded bushing plate (3) have double-surface spearhead-like spikes whereby, in firm, stony and rocky ground, jamming of the threaded rod (4) is prevented.

3. Spider anchor according to either claim 1 or claim 2, **characterised in that** the use of a threaded bushing (2) which can be screwed onto the upper end of the threaded pipe (1) makes it possible to lengthen the anchor as required.

## Revendications

1. Dispositif d'ancrage en forme d'araignée pour un ancrage dans la terre, composé d'un tube fileté (1) qui est pourvu d'un filetage, sur sa surface, et sur lequel est fixée par simple vissage une plaque à manchons filetés (3) dudit dispositif à travers laquelle des tiges (4) du dispositif d'ancrage sont aptes à être introduites dans la terre pour augmenter la résistance aux forces de traction, aux forces de pression et aux forces transversales,
**caractérisé en ce que** les tiges (4) sont conçues comme des tiges filetées et sont aptes à être vissées dans la terre dans le même sens et en sens inverse et suivant des angles définis, à travers la plaque à manchons filetés (3), de sorte qu'on obtient une fixation du type araignée du dispositif d'ancrage.

2. Dispositif d'ancrage en forme d'araignée selon la revendication 1, **caractérisé en ce que** les tiges filetées (4) aptes à être vissées dans la terre par l'intermédiaire de la plaque à manchons filetés (3) présentent des pointes en forme de pointes de flèches à deux côtés plats, ce qui évite, dans un terrain solide, pierreux et rocheux, un coincement de la tige filetée (4).

3. Dispositif d'ancrage en forme d'araignée selon la revendication 1 ou 2, **caractérisé en ce que** grâce à l'utilisation d'un manchon fileté (2) apte à être vissé sur l'extrémité supérieure du tube fileté (1), un prolongement du dispositif d'ancrage est possible suivant les besoins.
